Europäisches Patentamt

European Patent Office

Office européen des brevets

(19)

(11) Numéro de publication : **0 080 391**
**B1**

(12) **FASCICULE DE BREVET EUROPÉEN**

(45) Date de publication du fascicule du brevet :
11.12.85

(21) Numéro de dépôt : 82401975.6

(22) Date de dépôt : 26.10.82

(51) Int. Cl.⁴ : **B 62 K 19/16**

(54) **Cadre de bicyclette à structure en coque, à éléments assemblés.**

(30) Priorité : 17.11.81 FR 8121447

(43) Date de publication de la demande :
01.06.83 Bulletin 83/22

(45) Mention de la délivrance du brevet :
11.12.85 Bulletin 85/50

(84) Etats contractants désignés :
**BE DE GB IT LU NL**

(56) Documents cités :
BE-A- 472 497
FR-A- 411 607
FR-A- 875 868
FR-A- 972 065
FR-A- 1 069 997
FR-A- 2 255 206

(73) Titulaire : **MANUFACTURE INDUSTRIELLE DE CYCLES ET MOTOCYCLES MICMO**
**Rue M. Brunelière**
**F-44270 Machecoul (FR)**

(72) Inventeur : **Diaz, Michel**
**Les Pilettes Rue Ernest Bouchet**
**F-26600 Tain L'Hermitage (FR)**
Inventeur : **Loelliet, Christian**
**7, Allée de Solesmes**
**F-77330 Feroles Atilly (FR)**

(74) Mandataire : **Ernst-Schonberg, Michel et al**
**RNUR - S. 0804 B.P. 103**
**F-92109 Boulogne-Billancourt (FR)**

Jouve, 18, rue St-Denis, 75001 Paris, France

## Description

La présente invention concerne un cadre de bicyclette à structure en coque réalisée à partir d'une manière moulable. L'invention vise plus particulièrement un cadre de bicyclette en matière plastique.

Selon les réalisations connues, les cadres des bicyclettes classiques sont généralement réalisés à partir de tubes métalliques de dimensions et de formes différentes qui sont assemblés les uns aux autres au moyen de raccords emmanchables. Ce système de fabrication exige des opérations de soudage, brasage et soudure autogène ainsi que des opérations de filetage, vernissage, etc., qui affectent de façon considérable le coût de la fabrication, compte tenu de l'incidence importante de la main-d'œuvre.

L'invention concerne plus particulièrement un cadre de bicyclette à structure en coque constitué par deux coquilles solidaires l'une de l'autre le long d'un plan d'assemblage longitudinal et portant des inserts de fixation et de maintien notamment de la fourche avant, de la tige de selle, du pédalier et de la roue arrière et dans laquelle chaque coquille possède un axe longitudinal de symétrie qui fractionne le cadre entre l'axe de passage de la tige de selle et l'axe du fourreau de montage de la fourche avant en deux éléments de poutre symétriques.

On connaît par le brevet FR-A-875 868 un cadre de bicyclette dont l'assemblage est réalisé sous forme de coquilles soudées, présentant la structure ci-dessus.

L'invention a pour but de proposer un cadre de bicyclette du type précité, mais présentant en outre une structure parfaitement symétrique, rendant le cadre réversible autour de son axe longitudinal, tout en simplifiant les opérations d'assemblage.

Conformément à l'invention un premier axe de passage de la tige de selle concourt, dans le plan d'assemblage longitudinal, avec l'axe du logement du pédalier et est incliné sur l'axe de symétrie de la coquille et un autre axe de passage de la tige de selle est disposé symétriquement audit premier axe de passage de la tige de selle, par rapport audit axe de symétrie, tandis que le logement du pédalier est symétrique d'un logement analogue situé à proximité du passage de la tige de selle.

Le cadre ainsi réalisé peut être assemblé avec un minimum d'outillage soit par collage, soit par mise en œuvre de fixations mécaniques (rivets, vis écrous, agrafes) et il ne nécessite qu'un type d'outil pour façonner l'ensemble des deux coquilles du même cadre.

Le cadre de bicyclette à structure en coque conforme à l'invention sera réalisé de préférence en une matière de résine polyester armée de fibres de verre dont l'emploi est bien connu dans l'industrie automobile.

Bien que les coquilles soient obtenues de préférence par compression à chaud de résines polyester préimprégnées renforcées de fibres de verre, elles peuvent tout aussi bien être obtenues par injection de matière plastique dans un moule, par emboutissage, par déformation à chaud ou à froid de métaux.

Diverses autres caractéristiques ressortiront de la description ci-après faite en référence au dessin annexé qui montre, à titre d'exemple non limitatif, un exemple de réalisation du cadre.

Sur ce dessin :

la figure 1 est une vue de la face externe d'une coquille obtenue par moulage ;

la figure 2 est une vue de dessus des deux coquilles assemblées telles que représentées à la figure 1 ;

les figures 3 à 8 illustrent des modes d'assemblage possibles des coquilles selon le plan de section III-III de la figure 1 ;

les figures 9 à 11 illustrent des modes d'assemblage possibles des coquilles, dans le plan de section passant par les gaines de passage des commandes du cycle ;

la figure 12 est une coupe selon le plan XII de la figure 10 ;

les figures 13-14 sont des coupes des formes d'entrée ou de sortie des gaines représentées aux figures 9 à 11.

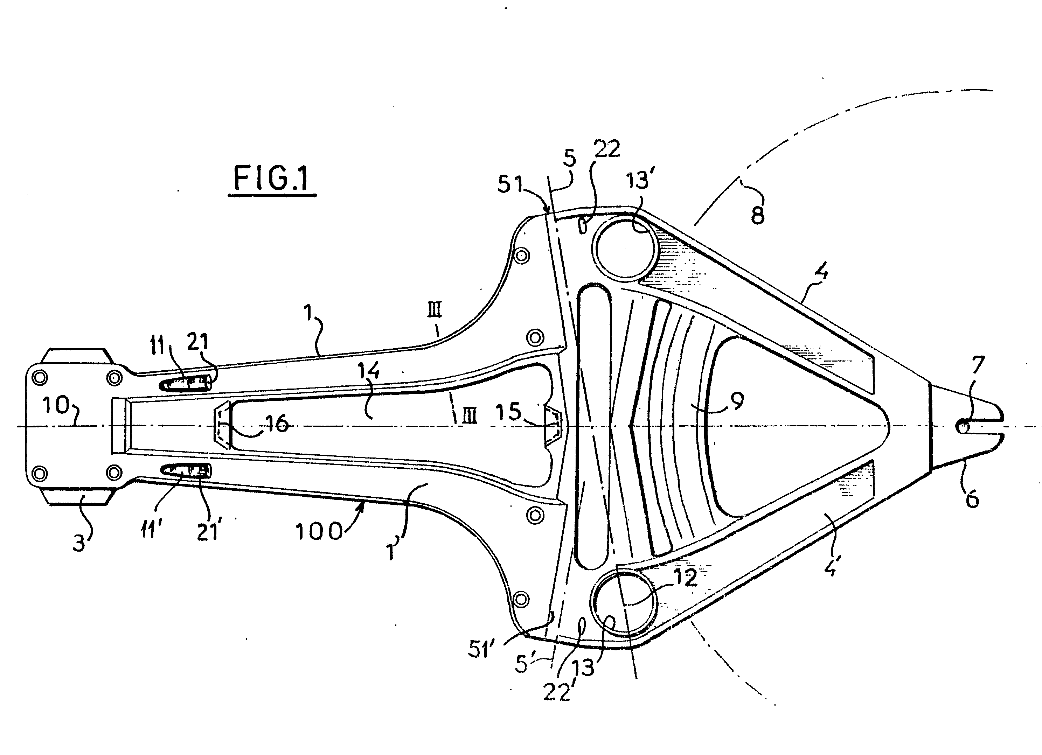

La figure 1 montre la face externe d'une coquille 100 réalisée par compression à la presse d'une résine polyester armée de fibres de verre placée dans un moule.

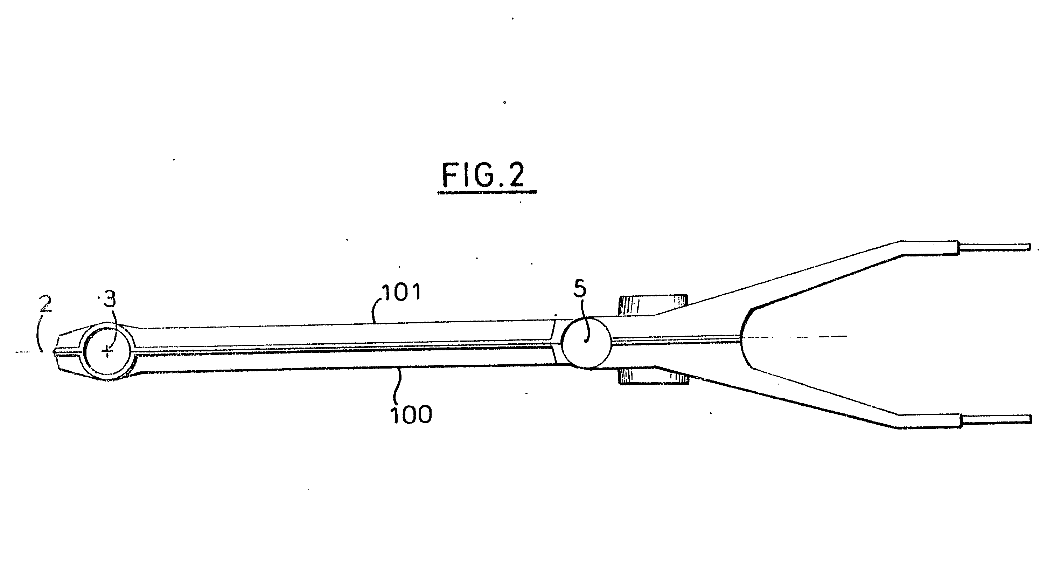

Le cadre à structure en coque représenté à la figure 2 est constitué par assemblage de deux coquilles 100, 101 telles que représentées à la figure 1.

Le cadre comprend une poutre 1 constituée par assemblage de deux profils de section appropriés présentant la particularité de comporter un plan d'assemblage longitudinal 2.

La poutre 1 s'étend du fourreau 3 de la tête de fourche de la roue avant non représentée jusqu'à la zone de liaison avec l'hauban 4 et qui porte l'axe 5 du passage 51 de l'insert support de la tige de selle.

Disposés de façon symétrique par rapport à l'axe longitudinal 10 de la coquille, on trouve une poutre 1' qui s'étend du même fourreau 3 jusqu'à la zone de liaison avec un hauban 4' symétrique de l'hauban 4 qui porte l'axe 5' du passage 51' de l'insert support de la tige de selle.

Les haubans 4, 4' sont réunis l'un à l'autre dans la partie postérieure du cadre qui porte un insert 6 muni d'un palier ouvert 7 pour le montage de la partie terminale d'un axe de moyeu de roue arrière 8 représentée en traits mixtes.

Les haubans 4, 4' sont constitués par deux profils en I dont l'âme possède une hauteur croissant progressivement depuis l'insert 6.

Les haubans 4, 4' sont par ailleurs conformés de façon que leurs âmes se raccordent dans le passage de la roue 8 formant garde-boue 9.

La section et la forme des poutres 1, 1' sont

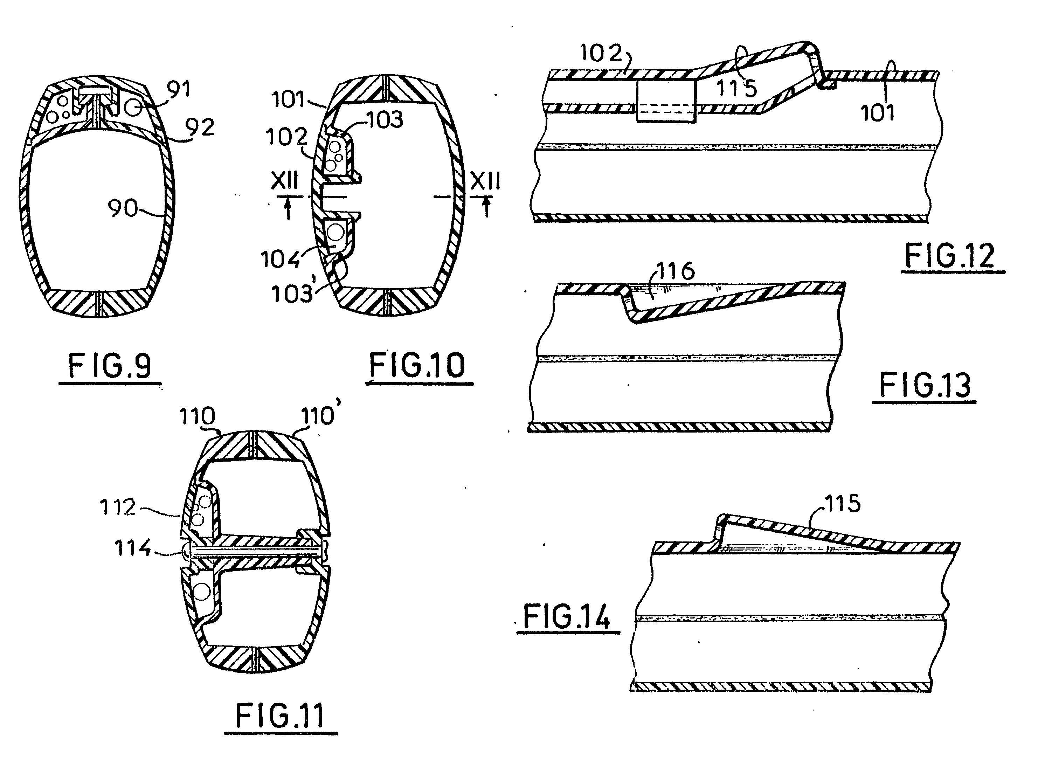

déterminées dans le souci de résister aux moments fléchissants et aux contraintes diverses. Chaque poutre 1, 1' possède par ailleurs, individuellement, un axe de symétrie et porte au besoin un chemin de passage 11 et 11' de câbles tels que les câbles de commande des freins, du mécanisme de changement de vitesses et des accessoires d'éclairage dont l'entrée peut être située sur la poutre ou sur un élément rapporté sur le chemin de câble tel que décrit ci-après en référence des figures 9 à 11.

Comme précisé pour les haubans 4, 4', les poutres 1, 1' possèdent également un profil de section variable depuis le fourreau 3 jusqu'à la zone de la coquille proche de l'axe de passage du support de la tige de selle et de l'axe 12 du logement 13 du pédalier.

Conformément à l'invention, l'axe de passage 5 de l'insert support de la tige de selle qui concourt dans le plan d'assemblage 2 avec l'axe 12 du logement 13 de pédalier est incliné sur l'axe de symétrie 10 de la coquille, et ce même logement 13 de pédalier est symétrique par rapport à l'axe 10, d'un logement analogue 13' situé à proximité du passage de la tige de selle d'axe 5.

La disposition constructive précitée est particulièrement intéressante du fait que le cadre peut être fabriqué avec un seul jeu d'outillage (moule ou outillage d'emboutissage à une empreinte).

En outre, le logement 13' assurera utilement la retenue et le positionnement d'une partie rapportée du garde-boue de la roue arrière.

Ainsi que cela a été montré à la figure 1, du fait de l'écartement des poutres 1, 1', on a fractionné le plan d'assemblage 2 des coquilles entre l'axe 5 de passage de la tige de selle et l'axe du fourreau de montage 3 de la fourche avant.

On constitue de la sorte un logement longitudinal 14 dont les extrémités opposées reçoivent des supports 15, 16 en forme de cuvette. Le logement 14 peut recevoir ainsi certains accessoires tels qu'une pompe de gonflage maintenue en position entre les supports 15, 16.

Les moyens d'assemblage des coquilles sont constitués à base d'adhésifs associés au besoin à des fixations mécaniques.

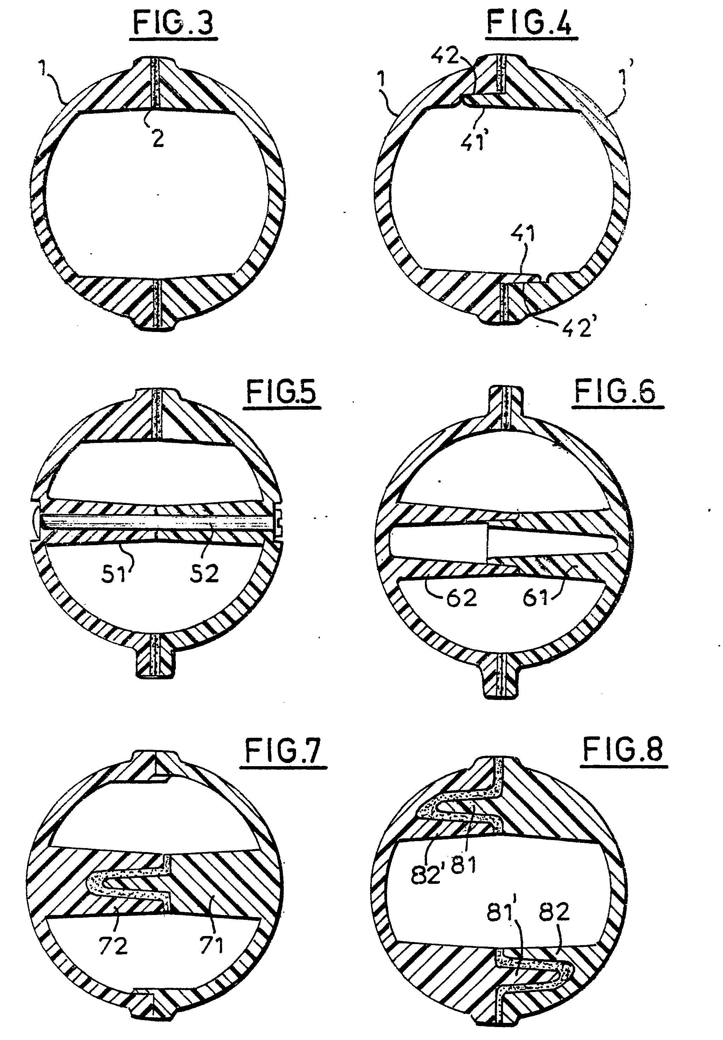

La figure 3 illustre un exemple de réalisation d'une section du cadre par exemple au niveau des poutres 1 ou 1', sans moyens de centrage additionnels. Les coquilles sont positionnées par la machine de collage et la surface de collage est constituée directement dans le plan d'assemblage 2.

La figure 4 illustre une variante de réalisation de la section du cadre dans laquelle les surfaces internes des éléments d'une même coquille possèdent des inégalités de forme localisées.

Selon l'exemple décrit, le côté interne de l'élément de poutre 1 d'une coquille possède des inégalités de forme complémentaires constituées par une nervure de centrage 41 et une surface d'appui 42. L'élément de poutre 1' de l'autre coquille possède des inégalités de forme analogues 41', 42' de sorte que les formes 41, 42' et 42, 41' puissent être ajustées et si nécessaire solidarisées lors de l'assemblage des coquilles après retournement de l'une d'elles autour de son axe de symétrie. Bien entendu, la surface de collage peut être plus ou moins importante selon l'importance de la section à assembler et des contraintes mécaniques qu'elle subit par l'usage de la bicyclette.

La figure 5 illustre une section de cadre dont les côtés internes des coquilles possèdent des inégalités de forme constitués par des puits de passage 51 de rivets 52.

La figure 6 illustre une section de cadre dont les côtés internes des coquilles portent des tenons 61 et des mortaises 62.

Les sections précitées illustrées par les figures 3 à 6 montrent des surfaces de collage communiquant avec la paroi externe de la coquille.

Conformément à la figure 7, le collage s'effectue au niveau de la jonction du tenon 71 et de la mortaise 72. Le centrage des coquilles entre elles s'effectue conformément à l'exemple déjà décrit en référence à la figure 4. Cette disposition ne nécessite aucun ébavurage de l'excédent de colle.

La figure 8 illustre un assemblage de coquilles par un ensemble de tenons 81, 81' et mortaises 82, 82' avec collage au niveau de la jonction du tenon et de la mortaise en correspondance.

Il y a lieu de noter que la forme des sections du cadre n'est pas restrictive sous réserve qu'elles puissent être obtenues par moulage et que leur résistance demeure suffisante.

Dans le cadre conforme à l'invention, on peut être amené à insérer des passages de câbles destinés à la commande des freins, du mécanisme de changement des vitesses ou du dispositif d'éclairage.

La figure 9 représente un moyen d'insertion de gaines 91 sous un couvercle rapporté 92 sur une poutre 90 constituée par l'assemblage des deux coquilles. Le chemin de câble peut être constitué le long d'une face de la poutre de sorte à être tourné vers l'extérieur de la poutre.

Le couvercle 92 est intégré en partie à la surface enveloppe de l'élément de coquille et est maintenu en place par agrafage. Ce couvercle peut constituer utilement un motif de décor s'il possède une coloration différente de celle de la coquille. Le couvercle 92 peut coiffer ainsi que cela est représenté la ligne d'assemblage des coquilles constitutives du cadre.

Selon la figure 10, le couvercle 102 coiffe latéralement le flanc extérieur d'un élément 101 de la coquille et est emboîté entre les parois latérales 103, 103' d'une rainure 104 ouverte sur ce même flanc. Le couvercle 102 est ici maintenu en place par un moyen d'agrafage qui assure la retenue positive du couvercle dans le fond de la rainure.

Selon la figure 11 qui n'est qu'une variante de réalisation de la figure 10, le couvercle 112 est maintenu en place par les rivets d'assemblage 114 des éléments 110, 110' de coquille.

Dans l'ensemble des exemples décrits en référence des figures 9 à 11, le couvercle peut être localement déformé sous la forme d'un bossage 115 tel que représenté aux figures 12 et 14 ou d'une rainure 116 telle que représentée à la figure 13. De telles configurations facilitent l'entrée ou la sortie des câbles ou de leurs gaines.

La fabrication du cadre conforme à l'invention s'opère de préférence par compression d'une résine armée dans un moule simple ou multiple selon que l'on désire obtenir simultanément une ou deux coquilles identiques.

L'assemblage des coquilles s'opère après retournement de l'une d'elles autour de son axe de symétrie 10. A cet effet, on découpe ou perce dans chaque coquille à l'endroit souhaité les ouvertures manquantes telles que le passage 51 de l'insert de la tige de selle, les orifices d'entrée et de sortie 21, 22 du chemin de câble. On enlève au besoin le fond restant du logement 13 de pédalier.

La première coquille ainsi préparée possède au moins le logement 13 de pédalier. Le logement symétrique 13' sert à la fixation et au positionnement d'un élément arrière de garde-boue et au passage d'un éventuel dispositif de serrage du tube de selle.

La deuxième coquille possède au moins le logement 13' de pédalier. le logement symétrique 13 sert ici à la fixation et au positionnement de l'élément arrière de garde-boue. Le passage 51' de l'insert de la tige de selle est dégagé, tandis que le passage 51 reste bouché.

Après mise en place des divers inserts destinés à recevoir la tête de la fourche avant, la tige de selle et le pédalier, on assemble les deux coquilles par retournement de l'une d'elles pour les accoler selon leur plan d'assemblage longitudinal 2.

L'assemblage proprement dit des coquilles met en œuvre des méthodes de collage, agrafage, rivetage ou soudure par ultra-sons adaptées aux matières utilisées dans la confection des coquilles ainsi que cela a été décrit en référence des diverses figures.

## Revendications

1. Cadre de bicyclette à structure en coque, constitué par deux coquilles (100, 101) solidaires l'une de l'autre le long d'un plan d'assemblage longitudinal (2) et portant des inserts de fixation et de maintien notamment de la fourche avant, de la tige de selle, du pédalier et de la roue arrière et dans lequel chaque coquille (100, 101) possède un axe longitudinal de symétrie (10) qui fractionne le cadre entre l'axe (5) du passage de la tige de selle et l'axe du fourreau (3) de montage de la fourche avant en deux éléments de poutre symétriques (1, 1') caractérisé par le fait qu'un premier axe de passage (5) de la tige de selle concourt, dans le plan d'assemblage longitudinal (2), avec l'axe (12) du logement (13) du pédalier et est incliné sur l'axe de symétrie (10) de la coquille (100, 101) et qu'un autre axe de passage (5') de la tige de selle est disposé symétriquement audit premier axe de passage (5) de la tige de selle, par rapport audit axe de symétrie (10) tandis que le logement (13) du pédalier est symétrique d'un logement analogue (13') situé à proximité du passage de la tige de selle.

2. Cadre de bicyclette selon la revendication 1, caractérisé par le fait que le logement (13') situé à proximité du passage de la tige de selle constitue le logement de montage d'une partie d'un garde-boue.

3. Cadre de bicyclette selon la revendication 1, caractérisé par le fait que les surfaces internes des éléments d'une même coquille possèdent des inégalités de forme localisées.

4. Cadre de bicyclette selon la revendication 3, caractérisé par le fait que les inégalités de forme localisées sur la surface interne des deux éléments de coquille sont complémentaires et ajustables l'une à l'autre.

5. Cadre de bicyclette selon la revendication 4, caractérisé par le fait que les inégalités de forme sont constituées par des nervures de centrage et une surface d'appui (41, 42-41', 42').

6. Cadre de bicyclette selon la revendication 4, caractérisé par le fait que les inégalités de forme sont constituées par des puits de passage (51) de rivets de fixation (52).

7. Cadre de bicyclette selon la revendication 4 ou 5, caractérisé par le fait que les inégalités de forme sont constituées par des tenons (61, 71, 81) et des mortaises (62, 72, 82).

8. Cadre de bicyclette selon l'une quelconque des revendications 3 à 7, caractérisé par le fait que les éléments de coquille symétriques portent un chemin de passage de câbles de commande.

9. Cadre de bicyclette selon la revendication 8, caractérisé par le fait que le chemin de passage de câbles (11, 11') est formé le long d'une poutre (1, 1') du cadre et est tourné vers l'extérieur de la face de l'étalement de coquille correspondant.

10. Cadre de bicyclette selon la revendication 9, caractérisé par le fait que le chemin de passage de câble est recouvert par un couvercle (92) rapporté sur l'élément de coquille (90) dont une partie est située dans la surface enveloppe de cet élément de coquille.

11. Cadre de bicyclette selon l'une quelconque des revendications 8 à 10, caractérisé par le fait que le couvercle (92) coiffe la ligne d'assemblage des coquilles et est muni de moyens d'accrochage et de retenue positive.

12. Cadre de bicyclette selon la revendication 11, caractérisé par le fait que le couvercle (102) coiffe latéralement un flanc extérieur d'un élément (101) de la coquille et est emboîté entre les parois latérales (103, 103') d'une rainure (104) ouverte sur ce même flanc.

13. Cadre de bicyclette selon la revendication 11 ou 12, caractérisé par le fait que le couvercle (102) est localement déformé (115, 116) et porte l'entrée et/ou la sortie du chemin de passage du câble.

## Claims

1. A bicycle frame of shell structure type comprising two shell members (100, 101) which are fixed together along a longitudinal assembly plane (2) and which carry fixing and holding inserts in particular for the front fork, the saddle stem, the crank assembly and the rear wheel and in which each shell member (100, 101) has a longitudinal axis of symmetry (10) which divides the frame between the axis (5) of the passage for the saddle stem and the axis of the head member (3) for mounting the front fork into two symmetrical beam elements (1, 1') characterised in that a first passage axis (5) for the saddle stem coincides in the longitudinal assembly plane (2) with the axis (12) of the housing (13) for the crank assembly and is inclined with respect to the axis of symmetry (10) of the shell member (100, 101), and that another passage axis (5') for the saddle stem is disposed symmetrically to said first saddle stem passage axis (5) with respect to said axis of symmetry (10) while the housing (13) for the crank assembly is symmetrical to a similar housing (13') which is disposed in the vicinity of the passage for the saddle stem.

2. A bicycle frame according to claim 1 characterised in that the housing (13') which is disposed in the vicinity of the passage for the saddle stem forms the housing for mounting a portion of a mudguard.

3. A bicycle frame according to claim 1 characterised in that the internal surfaces of the elements of the same shell member have localised disparities in shape.

4. A bicycle frame according to claim 3 characterised in that the localised disparities in shape on the inside surface of the two shell elements are complimentary and adjustable relative to each other.

5. A bicycle frame according to claim 4 characterised in that the disparities in shape comprise centering ribs and a support surface (41, 42-41', 42').

6. A bicyle frame according to claim 4 characterised in that the disparities in shape are formed by holes (51) for receiving fixing rivets (52).

7. A bicycle frame according to claim 4 or claim 5 characterised in that the disparities in shape are formed by tenons (61, 71, 81) and mortices (62, 72, 82).

8. A bicycle frame according to any one of claims 3 to 7 characterised in that the symmetrical shell elements carry a duct for accommodating control cables.

9. A bicycle frame according to claim 8 characterised in that the duct for the cables (11, 11') is formed along a beam member (1, 1') of the frame and its turned towards the outside of the face of the corresponding shell element.

10. A bicycle frame according to claim 9 characterised in that the cable duct is covered by a cover (92) which is fitted on to the shell element (90) of which a portion is disposed in the envelope surface of said shell element.

11. A bicycle frame according to any one of claims 8 to 10 characterised in that the cover (92) caps the line of assembly of the shell members and is provided with positive retaining and catch means.

12. A bicycle frame according to claim 11 characterised in that the cover (102) laterally covers an outside side surface of an element (101) of the shell and is engaged between the side walls (103, 103') of a groove (104) which is open on said same side surface.

13. A bicycle frame according to claim 11 or claim 12 characterised in that the cover (102) is locally deformed (115, 116) and carries the entry and/or the exit of the cable duct.

## Patentansprüche

1. Zusammengesetzter Fahrradrahmen, bestehend aus zwei miteinander entlang einer in Längsrichtung liegenden Verbindungsebene (2) verbundenen Schalen (100, 101), der mit Halte- und Befestigungsmitteln, insbesondere für die Vordergabel, den Sattelträger, das Tretlager und das Hinterrad versehen ist, wobei jede Schale (100, 101) in Längsrichtung eine Symmetrieachse (10) aufweist, die den Rahmen zwischen der Achse (5) der Aufnahmeöffnung für den Sattelträger und der Achse der Aufnahmebuchse (3) für die Vordergabel in zwei symmetrische Trägerteile (1, 1') unterteilt, dadurch gekennzeichnet, daß eine erste Achse (5) der Aufnahmeöffnung für den Sattelträger in der in Längsrichtung liegenden Verbindungsebene (2) die Achse (12) der Aufnahmeöffnung (13) des Tretlagers schneidet und bezüglich der Symmetrieachse (10) der Schale (100, 101) geneigt ist und daß eine andere Achse (5') der Aufnahmeöffnung für den Sattelträger symmetrisch zur ersten Achse (5) der Aufnahmeöffnung für den Sattelträger bezüglich der Symmetrieachse (10) angeordnet ist, während die Aufnahmeöffnung (13) für das Tretlager symmetrisch zu einer analogen Aufnahmeöffnung (13') in der Nähe der Aufnahmeöffnung für den Sattelträger angeordnet ist.

2. Fahrradrahmen nach Anspruch 1, dadurch gekennzeichnet, daß die Aufnahmeöffnung (13') in der Nähe der Aufnahmeöffnung für den Sattelträger eine Halterung eines Teils eines Schutzbleches bildet.

3. Fahrradrahmen nach Anspruch 1, dadurch gekennzeichnet, daß die Innenflächen der Teile ein und derselben Schale örtliche Unebenheiten aufweisen.

4. Fahrradrahmen nach Anspruch 3, dadurch gekennzeichnet, daß die örtlichen Unebenheiten auf den Innenflächen der beiden Schalenteile zueinander komplementär und eingreifbar sind.

5. Fahrradrahmen nach Anspruch 4, dadurch gekennzeichnet, daß die Unebenheiten aus Zentrierungsrippen und einer Stützfläche (41, 42-41', 42') bestehen.

6. Fahrradrahmen nach Anspruch 4, dadurch gekennzeichnet, daß die Unebenheiten aus Aufnahmeöffnungen (51) für Befestigungsnieten (52) bestehen.

7. Fahrradrahmen nach Anspruch 4 oder 5, dadurch gekennzeichnet, daß die Unebenheiten aus Zapfen (61, 71, 81) und Zapfenlöchern (62, 72, 82) bestehen.

8. Fahrradrahmen nach einem der Ansprüche 3 bis 7, dadurch gekennzeichnet, daß die symmetrischen Schalenteile einen Durchlaßkanal für Steuerkabel aufweisen.

9. Fahrradrahmen nach Anspruch 8, dadurch gekennzeichnet, daß der Durchlaßkanal (11, 11') für die Kabel entlang eines Rahmenträgers (1, 1') ausgebildet ist und zur Außenwand hin des entsprechenden Schalenteils abgebogen ist.

10. Fahrradrahmen nach Anspruch 9, dadurch gekennzeichnet, daß der Durchlaßkanal für die Kabel von einer Abdeckung (92) bedeckt ist, die am Schalenteil (90) befestigt ist, von dem ein Teil in der es umgebenden Fläche dieses Schalenteils angeordnet ist.

11. Fahrradrahmen nach einem der Ansprüche 8 bis 10, dadurch gekennzeichnet, daß die Abdeckung (92) die Verbindungslinie der Schalen bedeckt und mit Verankerungsmitteln und einer vorspringenden Halterung versehen ist.

12. Fahrradrahmen nach Anspruch 11, dadurch gekennzeichnet, daß die Abdeckung (102) seitlich eine Außenflanke eines Teils (101) der Schale bedeckt und zwischen den Seitenwänden (103, 103') einer zu dieser Flanke offenen Nut (104) eingeklemmt ist.

13. Fahrradrahmen nach Ansprüchen 11 oder 12, dadurch gekennzeichnet, daß die Abdeckung (102) örtlich deformiert ist (115, 116) und die Eintritts- und/oder Austrittsöffnung des Durchlaßkanals für die Kabel aufweist.

FIG.1

0 080 391

# FIG.2

101

3

100

5

0 080 391

# FIG.3

# FIG.4

# FIG.5

# FIG.6

# FIG.7

# FIG.8

FIG.12

FIG.13

FIG.14

FIG.10

FIG.11

FIG.9